# EUROPÄISCHE PATENTSCHRIFT

(11) **EP 3 259 293 B1**
(45) Veröffentlichungstag und Bekanntmachung des Hinweises auf die Patenterteilung: **04.08.2021**
(21) Anmeldenummer: 16704673.9
(22) Anmeldetag: 17.02.2016
(51) Int. Cl.: C08G 18/00, C08G 18/18, C08G 101/00, C08J 9/02, C08J 9/12, C08J 9/00

(54) **TEMPERATURBESTÄNDIGE SCHAUMSTOFFE AUF ISOCYANATBASIS MIT HOHER FLAMMWIDRIGKEIT**
TEMPERATURE-RESISTANT ISOCYANATE-BASED FOAMS HAVING A HIGH FLAME RESISTANCE
MOUSSES À BASE D'ISOCYANATE RÉSISTANTES AUX TEMPÉRATURES AYANT UNE HAUTE RÉSISTANCE AUX FLAMMES

(30) Priorität: 20.02.2015 EP 15155888
(43) Veröffentlichungstag der Anmeldung: 27.12.2017
(73) Patentinhaber: BASF SE, 67056 Ludwigshafen (DE)
(72) Erfinder: MENON, Sindhu, 200135 Pudong (CN); KRÄMER, Roland, 200120 Pudong (CN); BOOS, Jürgen, 48531 Nordhorn (DE); HUPKA, Florian, 40589 Düsseldorf (DE); HAGEN, Torsten, 45257 Essen (DE)
(74) Vertreter: dompatent von Kreisler Selting Werner - Partnerschaft von Patent- und Rechtsanwälten mbB
(86) Internationale Anmeldenummer: PCT/EP2016/053371
(87) Internationale Veröffentlichungsnummer: WO 2016/131874

(56) Entgegenhaltungen:
- WO-A1-2004/085509
- WO-A1-2007/132463
- WO-A1-2012/080185
- DE-A1- 1 915 766
- DE-A1- 3 713 771
- DE-A1- 3 824 685
- DE-A1- 4 104 199
- US-A- 3 849 349

## Beschreibung

Die vorliegende Erfindung betrifft ein Verfahren zur Herstellung eines Schaumstoffs bei dem man a) Polyisocyanat mit b) mindestens einer, mindestens zwei Epoxidgruppen aufweisenden organischen Verbindung, c) mindestens einem, die Isocyanat/Epoxid-Reaktion beschleunigenden Katalysator, d) chemischen und/oder physikalischen Treibmitteln, enthaltend Ameisensäure, und e) gegebenenfalls Hilfs- und Zusatzstoffen, insbesondere e1) mehrfunktionelle Hydroxyl- oder Aminogruppenhaltige Verbindungen, zu einer Reaktionsmischung vermischt, wobei das Äquivalentverhältnis von Isocyanatgruppen zu Epoxidgruppen von 1,2 : 1 bis 500 : 1 ist, wobei die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der gegebenenfalls eingesetzten Komponente e1) und den gegebenenfalls in der Komponente b) vorliegenden Hydroxylgruppen mindestens 1,2 : 1 beträgt, wobei im Falle des Einsatzes der Komponente e1) das NCO/OH-Äquivalentverhältnis, bezogen auf die Isocyanatgruppen der Komponente a) und die Hydroxylgruppen und/oder Aminogruppen der Komponente e1) mindestens 2:1 beträgt, und man die Reaktionsmischung zum Schaumstoff umsetzt, wobei der die Isocyanat/Epoxid-Reaktion beschleunigende Katalysator mindestens einen Katalysator aufweist, der ausgewählt ist aus der Gruppe, bestehend aus N,N,N-Trimethylaminoethylethanolamin, Bisdimethylaminopropylharnstoff, Dimethylaminopropylharnstoff, N,N,N-Trimethyl-N-hydroxyethylbis(aminopropylether), N,N,N-Trimethyl-N-hydroxyethylbis(aminoethylether), 2-Dimethylaminoethanol, Diethylethanolamin, Bis(N,N-dimethyl-3-aminopropyl)amin, Dimethylaminopropylamin, 3-Dimethylaminopropyl-N,N-dimethylpropan-1,3-diamin, Dimethyl-2-(2-amino-ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether) oder Mischungen davon, und wobei die Isocyanate a) 2,2'-MDI oder 2,4'-MDI oder 4,4'-MDI oder oligomeres MDI, oder Mischungen aus zwei oder drei der Diphenylmethandiisocyanate 2,2'-MDI, 2,4'-MDI und 4,4'-MDI, oder Roh-MDI, oder Mischungen aus mindestens einem Oligomer des MDI und mindestens einem der niedermolekularen MDI-Derivate 2,2'-MDI, 2,4'-MDI oder 4,4'-MDI aufweisen, sowie Schaumstoffe, erhältlich nach diesem Verfahren und die Verwendung dieser Schaumstoffe als Füllschaum im Baubereich oder Kernschaum von Sandwich-Konstruktionen und zur Herstellung von Konstruktionsmaterialien oder Dämmmaterialien.

In frühen Untersuchungen beschreiben US 3 793 236, US 4 129 695 und US 3 242 108 die Herstellung von Schäumen aus Polyisocyanaten und Polyepoxiden. Teilweise wird, wie z.B. in US 3 849 349, die Zugabe von weiteren H-aktiven Substanzen beschrieben.

Der aktuellere Stand der Technik beschreibt die bevorzugte Herstellung solcher Schaumstoffe aus Reaktionsgemischen organischer Polyisocyanate und organischer Polyepoxide über eine Zwischenstufe enthaltend teilweise trimerisierte Isocyanuratgruppen (=Intermediat), welche mit Hilfe von Stoppern stabilisiert wird. In diesem Fall werden die hochtemperaturbeständigen Schaumstoffe durch Umsetzung von Reaktionsgemischen aus organischen Polyisocyanaten, organischen Polyepoxiden, Katalysatoren und Stoppern zu einem lagerstabilen höherviskosen Intermediat (,Vortrimerisierung') und der Umsetzung dieses höherviskosen Intermediats durch Zugabe von Treibmitteln und einem die Isocyanat/Epoxid-Reaktion spontan beschleunigenden Katalysator in den endgültigen geschäumten nicht mehr schmelzbaren Endzustand erhalten.

Die Herstellung von lagerstabilen Isocyanat-Epoxid-Gemischen unter Zugabe eines alkylierend wirkenden Inhibierungsmittels als Stopper wird zunächst in EP 0 331 996 und EP 0 272 563 beschrieben. Die Herstellung eines EPIC-Schaumstoffes (Epoxid/Isocyanat) aus einem über ein mit alkylierend wirkenden Sulfonsäurealkylestern als Stopper versetztes Intermediat wird in DE 39 38 062 A1 offenbart. Es wird beschrieben, dass sich als Isocyanatkomponente beliebige organische Polyisocyanate eingesetzt werden können, insbesondere Polyisocyanatgemische der Diphenylmethanreihe. Neben den 2,4'-Isomeren kann eine unter mehreren anderen als bevorzugt genannten Polyisocyanat-Komponente weitere isomere bzw. homologe Polyisocyanate der Diphenylmethanreihe enthalten und von 10 bis zu 60 Gew.-%, bezogen auf Gesamtgemisch an Polyisocyanaten, an höherkernigen Polyphenylpolymethylen-polyisocyanaten.

Die Qualität der so hergestellten Schäume lässt sich gemäß WO 2012/80185 A1 und WO 2012/150201 A1 entscheidend verbessern, wenn bestimmte Treibmittel für die Herstellung der EPIC-Schaumstoffe verwendet werden. Die Herstellung des EPIC-Schaums erfolgt nach der Lehre dieser Dokumente ebenfalls bevorzugt über die Umsetzung der Edukte in Gegenwart eines als Stopper wirkenden Stabilisators. Bei der als bevorzugt eingesetzten Polyisocyanat-Komponente handelt es sich im allgemeinen entweder um Gemische aus 2,4'-MDI mit 4,4'-MDI und gegebenenfalls 0 bis 20 Gew.-%, bezogen auf das Gesamtgemisch an 2,2'-MDI, oder aber um Gemische dieser Isomeren mit höherkernigem polymerem MDI (pMDI), wobei letzteres in den Gemischen im allgemeinen von 10 Gew.-% bis zu 60 Gew.-% bezogen auf Gesamtgemisch an Polyisocyanaten vorliegt. In den Beispielen werden Gemische aus isomeren Monomer-MDI Typen verwendet.

DE 19 15 766 A1 offenbart ein Verfahren zur Herstellung von gegen hohe Temperaturen beständigen Schaumstoffen geringer Dichte und die so hergestellten Schaumstoffe. Insbesondere wird ein Verfahren zur Herstellung von Zellpolymeren beschrieben, wobei etwa stöchiometrische Mengen eines organischen Polyisocyanats und eines monomeren Polyepoxids unter schaumbildenden Bedingungen umgesetzt werden, sowie die auf diese Weise erhaltenen Zellpolymere.

DE 37 13 771 A1 offenbart Oxazolidon enthaltende Isocyanurat-Schaumstoffe, die durch Umsetzen mindestens eines Polyisocyanates mit mindestens einem Polyepoxid in Gegenwart von Katalysator, Treibmittel und gegebenenfalls grenzflächenaktiver Bindung herstellbar sind und eine thermische Stabilität bei einer Temperatur von etwa 140° C oder höher zeigen.

DE 38 24 685 A1 offenbart eine schäumbare Zusammensetzung auf der Basis urethanhaltiger und mit Oxazolidon modifizierter Isocyanuratschäume, welche eine hervorragende Stabilität gegenüber einem Abbau bei hohen Temperaturen von mindestens 160° C sowie gegenüber einer Rißbildung und gegenüber einem Verschmoren aufweisen. Diese Schäume werden hergestellt, indem man mindestens ein Polyisocyanat mit mindestens einem Polyepoxid und mindestens einem Polyol in Gegenwart eines Katalysators und eines Treibmittels sowie gegebenenfalls eines oberflächenaktiven Mittels miteinander reagieren lässt.

DE 41 04 199 A1 offenbart ein Verfahren zur Herstellung von Polyurethan-Elastomeren, wie z. B. PU-Fasern, thermoplastische Elastomere (TPU), PU-Gießelastomere, und andere, wobei diese kompakt oder zellig sein können, durch Umsetzung von a) organischen und/oder modifizierten organischen Polyisocyanaten mit b) höhermolekularen Polyoxybutylen-polyoxyalkylen-glykolen, c) Kettenverlängerungs- und/oder Vernetzungsmitteln und d) Glycidylverbindungen in Gegenwart oder Abwesenheit von e) Treibmitteln, f) Katalysatoren, g) Hilfsmitteln und/oder Zusatzstoffen, und Mischungen aus den Polyoxybutylen-polyoxyalkylen-glykolen (b) und Glycidylverbindungen (d).

WO 2004/085509 A1 offenbart Schäume aus Polyurethan, insbesondere Polyisocyanuraten, mit einer Flammwidrigkeit der Klasse B2, die über die Reaktion von Polyolen und Isocyanaten in Gegenwart eines Katalysators, eines Polyepoxids und eines von Flurchlorkohlenwasserstoff, insbesondere von Fluorkohlenwasserstoff oder brennbaren Mitteln wie n-Pentan, verschiedenen Treibmittels erhalten werden.

WO 2007/132463 A1 offenbart eine flüssige Flammschutzmittelzusammensetzung, die ein oder mehrere Flammschutzmittel umfasst, wobei es sich um Epoxide handelt, die durch Reaktion von Tetrabromobisphenol A mit Epichlorhydrin sowie deren endverkappten Derivaten erhältlich sind. Die flüssige Zusammensetzung eignet sich insbesondere zur Herstellung von Polyurethan-Hartschaumstoffen.

Die im Stand der Technik beschriebenen hochtemperaturbeständigen Schaumstoffe enthaltend Reaktionsprodukte der EPIC-Reaktion sind bereits für ihre guten mechanischen Eigenschaften und ihre hohe Temperaturstabilität bekannt. Sie weisen auch bereits eine im Vergleich zu Polyurethan-Schäumen erschwerte Entflammbarkeit auf. Allerdings ist das Herstellungsverfahren über das zwei-Stufen-Verfahren recht aufwendig. Darüber hinaus ist zur Erreichung der guten mechanischen Eigenschaften ein Tempern der Schaumstoffe erforderlich. Schließlich sind die mechanischen Eigenschaften und insbesondere das Brandverhalten der Schaumstoffe mit und insbesondere ohne Zusatz von Flammschutzmittel weiter verbesserungswürdig.

Aufgabe der vorliegenden Erfindung war es daher, einen hochtemperaturbeständigen Schaumstoff auf Basis von Isocyanaten und organischen Polyepoxiden zu liefern, der einfach und schnell herstellbar ist, hervorragende mechanische Eigenschaften aufweist und eine geringe Brennbarkeit zeigt.

Die erfindungsgemäße Aufgabe wurde gelöst durch einen Schaumstoff, erhältlich durch ein Verfahren bei dem man a) Polyisocyanat mit b) mindestens einer, mindestens zwei Epoxidgruppen aufweisenden organischen Verbindung, c) mindestens einem, die Isocyanat/Epoxid-Reaktion beschleunigenden Katalysator, d) chemischen und/oder physikalischen Treibmitteln, enthaltend Ameisensäure, und e) gegebenenfalls Hilfs- und Zusatzstoffen, insbesondere e1) mehrfunktionelle Hydroxyl- oder Aminogruppenhaltige Verbindungen, zu einer Reaktionsmischung vermischt, wobei das Äquivalentverhältnis von Isocyanatgruppen zu Epoxidgruppen von 1,2 : 1 bis 500 : 1 ist, wobei die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der gegebenenfalls eingesetzten Komponente e1) und den gegebenenfalls in der Komponente b) vorliegenden Hydroxylgruppen mindestens 1,2 : 1 beträgt, wobei im Falle des Einsatzes der Komponente e1) das NCO/OH-Äquivalentverhältnis, bezogen auf die Isocyanatgruppen der Komponente a) und die Hydroxylgruppen und/oder Aminogruppen der Komponente e1) mindestens 2:1 beträgt, und man die Reaktionsmischung zum Schaumstoff umsetzt, wobei der die Isocyanat/Epoxid-Reaktion beschleunigende Katalysator mindestens einen Katalysator aufweist, der ausgewählt ist aus der Gruppe, bestehend aus N,N,N-Trimethylaminoethylethanolamin, Bisdimethylaminopropylharnstoff, Dimethylaminopropylharnstoff, N,N,N-Trimethyl-N-hydroxyethylbis(aminopropylether), N,N,N-Trimethyl-N-hydroxyethylbis(aminoethylether), 2-Dimethylaminoethanol, Diethylethanolamin, Bis(N,N-dimethyl-3-aminopropyl)amin, Dimethylaminopropylamin, 3-Dimethylaminopropyl-N,N-dimethylpropan-1,3-diamin, Dimethyl-2-(2-amino-ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether) oder Mischungen davon, und wobei die Isocyanate a) 2,2'-MDI oder 2,4'-MDI oder 4,4'-MDI oder oligomeres MDI, oder Mischungen aus zwei oder drei der Diphenylmethandiisocyanate 2,2'-MDI, 2,4'-MDI und 4,4'-MDI, oder Roh-MDI, oder Mischungen aus mindestens einem Oligomer des MDI und mindestens einem der niedermolekularen MDI-Derivate 2,2'-MDI, 2,4'-MDI oder 4,4'-MDI aufweisen.

Ein weiterer Gegenstand der Erfindung ist die Verwendung der schaumfähigen Mischungen vor dem Ende der Verschäumung zum erfindungsgemäßen hochtemperaturbeständigen Schaumstoff zum Verkleben von Substraten, insbesondere zum Verkleben von Stahl-, Aluminium- und Kupferblechen und Kunststoffplatten, insbesondere Polybutylenterephthalat-Platten.

Unter Polyisocyanat (a) wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente a) mindestens 2. Vorzugsweise beträgt die mittlere Isocyanatfunktionalität der Polyisocyanate a) mindestens 2,2 und besonders bevorzugt mindestens 2,4. Die mittlere Funktionalität der Komponente a) beträgt von 2,2 bis 4, bevorzugt 2,5 bis 3,8 und besonders bevorzugt von 2,7 bis 3,5. Vorzugsweise beträgt der Gehalt an Isocyanatgruppen der Komponente a) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

Die Viskosität der eingesetzten Komponente a) kann in einem weiten Bereich variieren. Vorzugsweise weist die Komponente a) eine Viskosität bei 25° C gemäß DIN 53 018 von 100 bis 10000 mPa*s, besonders bevorzugt von 200 bis 2500 mPa*s auf. Als Polyisocyanate a) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente a) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethytetramethyendiisocyanat-1,4,2-methypentamethyendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate, häufig auch zusammen mit nicht umgesetzten Polyisocyanaten

Erfindungsgemäß enthalten die Polyisocyanate der Komponente a) 2,2'-MDI oder 2,4'-MDI oder 4,4'-MDI oder oligomeres MDI, das aus höherkernigen Homologen des MDI, welche mindestens 3 aromatische Kerne und eine Funktionalität von mindestens 3 aufweisen, besteht, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate 2,2'-MDI, 2,4'-MDI oder 4,4'-MDI (auch als polymeres MDI bezeichnet).Üblicherweise werden die Isomeren und Homologen des MDI durch Destillation von Roh-MDI erhalten.

Vorzugsweise enthält polymeres MDI neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenpolyisocyanat bezeichnet.

Die (mittlere) Funktionalität eines Polyisocyanates, welches polymeres MDI enthält, kann im Bereich von ungefähr 2,2 bis ungefähr 4 variieren, insbesondere von 2,5 bis 3,8 und insbesondere von 2,7 bis 3,5. Eine solche Mischung von MDIbasierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® M20 oder Lupranat® M50 vertrieben.

Vorzugsweise enthält die Komponente (a) mindestens 70, besonders bevorzugt mindestens 90 und insbesondere 100 Gew.-%, bezogen auf das Gesamtgewicht der Komponente (a), ein oder mehrere Isocyanate, ausgewählt aus der Gruppe, bestehend aus 2,2'-MDI, 2,4'-MDI, 4,4'-MDI und Oligomeren des MDI. Dabei beträgt der Gehalt an oligomerem MDI vorzugsweise mindestens 50 Gew.-%, besonders bevorzugt größer 60 Gew.-% und insbesondere mindestens 64 Gew.-%, bezogen auf das Gesamtgewicht der Komponente (a).

Bei der Epoxidgruppen enthaltenden Komponente b) handelt es sich um beliebige, mindestens zwei Epoxidgruppen aufweisende aliphatische, cycloaliphatische, aromatische und/oder heterocyclische Verbindungen. Die bevorzugten als Komponente b) geeigneten Epoxide weisen pro Molekül 2 bis 4, vorzugsweise 2 Epoxidgruppen und ein Epoxidäquivalentgewicht von 90 bis 500 g/eq, vorzugsweise 140 bis 220 g/eq auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylpropan (Bisphenol A), von 4,4'-Dihydroxy-3,3'-dimethyldiphenylmethan, von 4,4'-Dihydroxydiphenylmethan (Bisphenol F), 4,4'-Dihydroxydiphenylcyclohexan, von 4,4'-Dihydroxy-3,3'-dimethyldiphenylpropan, von 4,4'-Dihydroxydiphenyl, aus 4,4'-Dihydroxydiphenylsulfon (Bisphenol S), von Tris-(4-hydroxyphenyl)-methan, den Chlorierungs- und Bromierungsprodukten der vorstehend genannten Diphenole, von Novolaken (d.h. aus Umsetzungsprodukten von ein- oder mehrwertigen Phenolen und/oder Kresolen mit Aldehyden, insbesondere Formaldehyd, in Gegenwart saurer Katalysatoren im Equivalenzverhältnis von kleiner 1 : 1), von Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N,N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Isophthalsäurediglycidylester, Terephthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen oder Hexahydrophthalsäurediglycidylester, die gegebenenfalls mit Methylgruppen substituiert sein können.

Glycidylether mehrwertiger Alkohole, beispielsweise von 1,4-Butandiol (Araldite® DY-D, Huntsman), 1,4-Butendiol, Glycerin, Trimethylolpropan (Araldite® DY-T/CH, Huntsman), Pentaerythrit und Polyethylenglykol können ebenfalls verwendet werden. Von weiterem Interesse sind Triglycidylisocyanurat, N,N'-Diepoxypropyloxyamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich können auch Epoxidierungsprodukte von mehrfach ungesättigten Verbindungen eingesetzt werden, wie vegetabilischen Ölen und deren Umwandlungsprodukten. Epoxidierungsprodukte von Di- und Polyolefinen, wie Butadien, Vinylcyclohexan, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten, können ebenfalls verwendet werden.

Außerdem können auch Polymerisate von ungesättigten Monoepoxiden eingesetzt werden, beispielsweise aus Methacrylsäureglycidylester oder Allylglycidylether.

Vorzugsweise werden erfindungsgemäß folgende Polyepoxidverbindungen oder deren Mischungen als Komponente b) verwendet:
Polyglycidylether mehrwertiger Phenole, insbesondere von Bisphenol A (Araldit® GY250, Huntsman; Ruetapox® 0162, Bakelite AG; Epikote® Resin 162, Hexion Specialty Chemicals GmbH; Eurepox 710, Brenntag GmbH;Araldit® GY250, Hunstman, D.E.R.™ 332, The Dow Chemical Company; Epilox® A 18-00, LEUNA-Harze GmbH) oder Bisphenol F (4,4'-Dihydroxy-diphenyl-methan, Araldit® GY281, Huntsman; Epilox® F 16-01, LEUNA-Harze GmbH; Epilox® F 17-00, LEUNA-Harze GmbH) Polyepoxidverbindungen auf der Basis von aromatischen Aminen, insbesondere Bis(N-epoxypropyl)anilin, N,N'-Dimethyl-N,N'-diepoxypropyl-4,4'-diaminodiphenylmethan und N,N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan; 3,4-Epoxycyclohexylmethan-3,4-epoxycyclohexan-carboxylat.

Polyglycidylether von Bisphenol A und Bisphenol F sowie von Novolaken sind ganz besonders bevorzugt, insbesondere Polyglycidylether von Bisphenol F.

Flüssige Polyepoxide oder niedrigviskose Diepoxide, wie Bis-(N-epoxypropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2 : 1 bis 500 : 1, vorzugsweise 3 : 1 bis 65 : 1, insbesondere 3 : 1 bis 30 : 1, besonders bevorzugt 3 : 1 bis 15 : 1, entspricht.

Katalysatoren c) beschleunigen die Reaktion der Epoxidgruppen aufweisenden organischen Verbindung (b) mit den organischen, gegebenenfalls modifizierten Polyisocyanaten (a) stark. Dabei enthalten die Katalysatoren (c) mindestens einen einbaubaren Aminkatalysator, der ausgewählt ist aus der Gruppe, bestehend aus N,N,N-Trimethylaminoethylethanolamin, Bisdimethylaminopropylharnstoff, Dimethylaminopropylharnstoff, N,N,N-Trimethyl-N-hydroxyethylbis(aminopropylether), N,N,N-Trimethyl-N-hydroxyethylbis(aminoethylether), 2-Dimethylaminoethanol, Diethylethanolamin, Bis(N,N-dimethyl-3-aminopropyl)amin, Dimethylaminopropylamin, 3-Dimethylaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether) oder Mischungen davon.

Neben den einbaubaren Aminkatalysatoren können weitere übliche Aminkatalysatoren, wie sie auch zur Herstellung von Polyurethanen bekannt sind, eingesetzt werden. Genannt seien beispielsweise Amidine, wie 2,3-Dimethyl-3,4,5,6-tetrahydropyrimidin, tertiäre Amine, wie Triethylamin, Tributylamin, Triethylendiamin, Dimethylcyclohexylamin, Dimethyloctylamin, N,N-Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(N,N-dimethylaminoethyl)-ether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan. Außerdem geeignet sind z.B. Pentamethyl-diethylentriamin, N-Methyl-N'-dimethylaminoethyl-piperazin, N,N-Diethylethanolamin sowie Silamorpholin, Bortrichlorid-tert.-Amin-Addukte sowie N-[3-(Dimethylamino)propyl]formamid.

Werden neben einbaubaren Katalysatoren weitere Katalysatoren eingesetzt, enthalten diese vorzugsweise Bortrichlorid-tert.-Amin-Addukte, N,N-Dimethylbenzylamin und/oder N,N-Methyldibenzylamin und/oder Bortrichloro(N,N-Dimethyloctylamin.

Katalysatoren (c) werden vorzugsweise in einer Konzentration von 0,001 bis 8 Gew.-%, besonders bevorzugt 0,6 bis 6 Gew.-%, weiter bevorzugt 1,5 bis 5 Gew.-% und insbesondere 2,1 bis 5 Gew.-% als Katalysator bzw. Katalysatorkombination, bezogen auf das Gesamtgewicht der Komponenten (a), (b) und (c), eingesetzt. Dabei beträgt der Anteil an Katalysator mit gegenüber Isocyanaten reaktiven Gruppen mindestens 5 Gew.-%, besonders bevorzugt mindestens 8 Gew.-% und insbesondere 8 bis 25 Gew.-%, bezogen auf den Katalysator (c).

Die chemischen und/oder physikalischen Treibmittel (d), welche zur Herstellung der erfindungsgemäßen Schaumstoffe verwendet werden, enthalten Ameisensäure, gegebenenfalls in Mischung mit weiteren Treibmitteln. Zusätzlich zu Ameisensäure und gegebenenfalls Wasser kommt als chemisches Treibmittel Phospholinoxid in Frage. Diese chemischen Treibmittel reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten a) inert sind und Siedepunkte unter 100° C, vorzugsweise unter 50° C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan, Pentafluorpropan, Heptafluorpropan und Hexafluorbuten. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Essigsäure, Oxalsäure, Ricinolsäure und carboxylgruppenhaltige Verbindungen. Vorzugsweise sind die physikalischen Treibmittel in der Komponente (b) löslich.

Vorzugsweise werden weniger als 2 Gew.-%, besonders bevorzugt weniger als 1 Gew.-%, mehr bevorzugt weniger als 0,5 Gew.-% und insbesondere keine halogenierten Kohlenwasserstoffe als Treibmittel (d) verwendet. Die Gewichtsanteile beziehen sich dabei jeweils auf das Gesamtgewicht der Komponenten (a) bis (e). Vorzugsweise werden als chemische Treibmittel Ameisensäure-Wasser-Mischungen oder Ameisensäure verwendet. Vorzugsweise werden als physikalische Treibmittel Pentanisomere, bzw. Mischungen von Pentan-isomeren verwendet.

Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel alleine verwendet. Werden chemische Treibmittel zusammen mit physikalischen Treibmitteln verwendet werden vorzugsweise Ameisensäure-Wasser-Mischungen oder reine Ameisensäure zusammen mit Pentanisomeren oder Gemischen aus Pentanisomeren eingesetzt. In einer besonders bevorzugten Ausführungsform stellt Ameisensäure das alleinige Treibmittel dar.

Als Hilfs- und Zusatzstoffe (e) können beispielsweise mehrfunktionelle Hydroxyl- oder Aminogruppenhaltige Verbindungen e1) eingesetzt werden, welche e1-i) Verbindungen umfassen, die mindestens 2, insbesondere 2 bis 8 und vorzugsweise 2 bis 3 alkoholische Hydroxylgruppen und ein Molekulargewicht von 62 bis 8000 g/mol aufweisen. Solche Verbindungen sind als Aufbaukomponente für Polyurethan an sich bekannt und umfassen niedermolekulare Kettenverlängerer und Polyole mit zahlenmittleren Molekulargewichten von größer als 200 g/mol. Beispiele für Kettenverlängerer sind einfache mehrwertige Alkohole wie Ethylenglykol, Hexadiol-1,6, Glycerin oder Trimethylolpropan, Beispiele für Polyole sind Dimethylsiloxan-Einheiten aufweisende Polyole, z.B. Bis-(dimethylhydroxymethyl-silyl)ether; Estergruppen aufweisende Polyhydroxylverbindungen wie z.B. Ricinusöl oder Polyhydroxypolyester, wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind, Poly-hydroxylpolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind, oder Polycarbonatpolyole, die beispielsweise aus mehrwertigen Alkoholen und Carbonaten oder Phosgen erhalten werden können.

Die Verbindungen e1) können darüber hinaus auch el-ii) Verbindungen mit mindestens zwei gegenüber Isocyanaten reaktiven Wasserstoffatomen sein, von denen mindestens eines zu einer primären oder sekundären Aminogruppe gehört. Diese umfassen Polyetheramine und Verbindungen mit Molekulargewichten von kleiner 500 g/mol und zwei Aminogruppen. Polyetheramine sind aus der Polyurethanchemie bekannt und können erhalten werden durch endständige Aminierung von Polyetherpolyolen. Diese weisen vorzugsweise Molekulargewichte von 500 bis 8000 g/mol auf. Die vorzugsweise verwendeten Verbindungen mit zwei Aminogruppen und mit Molekulargewichten von kleiner 500 g/mol weisen besonders bevorzugt ein Molekulargewicht von 58 bis 300 g/mol und insbesondere von 100 bis 200 g/mol auf. Dabei weisen diese Verbindungen als gegenüber Isocyanaten reaktive Gruppen vorzugsweise zwei primäre Aminogruppen auf. In einer besonders bevorzugten Ausführungsform sind die primären Aminogruppen an aromatische Kohlenstoffatome, vorzugsweise an einen aromatischen 6-Ring, insbesondere in Metha- oder Paraposition gebunden. Insbesondere wird als Verbindungen e1-ii) Diethylentoluoldiamin (DETDA), insbesondere DETDA 80 eingesetzt. Diethylentoluoldiamin ist kommerziell erhältlich, beispielsweise von der Lonza oder Abemarle.

Werden Verbindungen mit zwei Aminogruppen und mit Molekulargewichten von kleiner 500 g/mol eingesetzt, geschieht dies vorzugsweise in Mengen von 0,1 bis 5, besonders bevorzugt von 0,5 bis 2 Gew.-%, bezogen auf das Gesamtgewicht der Verbindungen (a) und (b).

Die Zusatzmittel e1) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen und/oder Aminogruppen der Komponenten e1), von mindestens 2 : 1, vorzugsweise mindestens 7 : 1 und insbesondere mindestens 10 : 1 entspricht. In jedem Fall muss die Menge der Komponente a) so bemessen sein, dass das Äquivalentverhältnis von Isocyanatgruppen der Komponente a) zur Summe der Epoxidgruppen der Komponente b), Hydroxylgruppen und/oder Aminogruppen der Komponente e1) und den gegebenenfalls in der Komponente b) vorliegenden Hydroxylgruppen mindestens bei 1,2 : 1, vorzugsweise 3 : 1 bis 65 : 1, insbesondere 3 : 1 bis 30 : 1, besonders bevorzugt 3 : 1 bis 15 : 1, liegt.

Das Verhältnis des Gewichts aller Hydroxyl- und / oder Harnstoffgruppen - haltigen Verbindungen aus der Komponente e1), vorzugsweise von Polyolen und Polyetheraminen, zu dem Gewicht der Epoxidkomponente b) ist bevorzugt kleiner als 30:70, bevorzugt beträgt es höchstens 28:72, besonders bevorzugt höchstens 25:75 und ganz besonders bevorzugt 0 bis 20:80 bis 100.

Der erfindungsgemäße EPIC-Schaum enthält Urethangruppen und/oder Harnstoffgruppen stammend aus der Reaktion des Polyisocyanats a) mit der Komponente e) vorzugsweise in einem kleinen Gewichtsanteil. Der Gehalt an Urethangruppen und/oder Harnstoffgruppen resultierend aus der Reaktion des Polyisocyanats a) mit den Hydroxyl- und/oder Harnstoffgruppen aus der Komponente e) liegt vorzugsweise unter 6 Gew.-%, bevorzugt unter 5 Gew.-%, besonders bevorzugt unter 4 Gew.-%, und ganz besonders bevorzugt unter 3 Gew.-%, bezogen auf das Gesamtgewicht der Komponenten. In einer Ausführungsform enthält der EPIC-Schaum keine Urethangruppen und / oder Harnstoffgruppen, die aus der Reaktion des Polyisocyanats a) mit der Komponente e) resultieren.

Bevorzugt enthält die Reaktionsmischung weniger als 28 Gew.-%, bevorzugt weniger als 25 Gew-% an Hydroxylgruppen- und/oder Aminogruppen-haltigen Verbindungen der Komponente e1), bezogen auf das Gesamtgewicht der Komponenten b) und e1), und der EPIC-Schaum enthält weniger als 6 Gew.-%, bevorzugt weniger als 5 Gew.-% an Urethan- und/oder Harnstoffgruppen stammend von aus der Reaktion des Polyisocyanats a) mit der Komponente e), bezogen auf das Gesamtgewicht des Schaums.

Besonders bevorzugt enthält die Reaktionsmischung weniger als 28 Gew.-%, bevorzugt weniger als 25 Gew-% an Polyolen und / oder Polyetheraminen, bezogen auf das Gesamtgewicht der Komponenten b) und Polyolen und / oder Polyetheraminen, und der EPIC-Schaum enthält weniger als 6 Gew.-%, bevorzugt weniger als 5 Gew.-% an Urethan- und/oder Harnstoffgruppen stammend von aus der Reaktion des Polyisocyanats a) mit der Komponente e), bezogen auf das Gesamtgewicht des Schaums.

Weitere, gegebenenfalls mitzuverwendende Hilfs- und Zusatzmittel e2) sind polymerisierbare, olefinisch ungesättigte Monomere, die in Mengen von bis zu 100 Gew.-%, vorzugsweise bis zu 50 Gew.-%, insbesondere bis zu 30 Gew.-%, bezogen auf das Gesamtgewicht der Komponenten a) und b) zum Einsatz gelangen können. Typische Beispiele von Zusatzmitteln e2) sind olefinisch ungesättigte Monomere, die keine gegenüber NCO-Gruppen reaktive Wasserstoffatome aufweisen, wie z.B. Diisobutylen, Styrol, C₁-C₄-Alkylstyrole, wie *α* -Methylstyrol, *α* -Butylstyrol, Vinylchlorid, Vinylacetat, Maleinimidderivate wie z.B. Bis-(4-maleinimido-phenyl)-methan, Acrylsäure-C₁-C₈-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-C₁-C₄-alkylester verwendet, vorausgesetzt, die Zusatzmittel e2) werden überhaupt eingesetzt.

Bei Mitverwendung von Zusatzmitteln e2) ist die Mitverwendung von klassischen Polymerisationsinitiatoren wie z.B. Benzoylperoxid möglich, im Allgemeinen jedoch nicht erforderlich.

Die Mitverwendung von Hilfs- und Zusatzmitteln e1) bzw. e2) ist im Allgemeinen nicht erforderlich. Die unter e1-i) und insbesondere unter e1-ii) beispielhaft genannten Zusatzmittel sind im Übrigen gegenüber den unter e2) beispielhaft genannten Verbindungen bevorzugt. Grundsätzlich ist es auch möglich, gleichzeitig alle drei Arten von Hilfs- und Zusatzmitteln mitzuverwenden.

Weitere gegebenenfalls mitzuverwendende Hilfs- und Zusatzmittel e) sind beispielsweise e3) Füllstoffe wie z.B. Quarzmehl, Kreide, Microdol, Aluminiumoxid, Siliciumcarbid, Graphit oder Korund; Pigmente wie z.B. Titandioxid, Eisenoxid oder organische Pigmente wie Phthalocyanin-Pigmente; Weichmacher wie z.B. Dioctylphthalat, Tributyl- oder Triphenylphosphat; einbaufähige Verträglichkeitsvermittler wie Methacrylsäure, *β*-Hydroxypropylester, Maleinsäure- und Fumarsäureester; Flammschutz verbessernde Substanzen wie roter Phosphor oder Magnesiumoxid; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "Liquid Crystal"). Weiterhin kommen als Füllstoffe metallische Füllstoffe in Betracht, wie Aluminium, Kupfer, Eisen und/oder Stahl. Die metallischen Füllstoffe werden insbesondere in körniger Form und/oder Pulverform eingesetzt.

Weitere gegebenenfalls mitzuverwendende Hilfs- und Zusatzmittel e) sind beispielsweise e4) olefinisch ungesättigte Monomere mit gegenüber NCO-Gruppen reaktiven Wasserstoffatomen wie z.B. Hydroxyethylmethacrylat, Hydroxypropylmethacrylat und Aminoethylmethacrylat.

Die Hilfs und Zusatzmittel e) können darüber hinaus noch e5) bekannten Schaumstoffstabilisatoren vom Typ der Polyethersiloxane, Formtrennmittel, z.B. Polyamidwachse und/oder Stearinsäurederivate und/oder natürliche Wachse, z.B. Carnaubawachs enthalten.

Die Hilfs- und Zusatzmittel e) können sowohl den Ausgangsmaterialien a) und b) vor der Durchführung des erfindungsgemäßen Verfahrens einverleibt als auch erst später zugemischt werden.

Dabei werden die Hilfs- und Zusatzstoffe e) in bevorzugter Weise nur in einer solchen maximalen Menge mitverwendet, dass das NCO/OH-Äquivalentverhältnis, bezogen auf die Isocyanatgruppen der Komponente a) und die Hydroxylgruppen und/oder Aminogruppen der Komponente e) 2 : 1, vorzugsweise mindestens 7 : 1 und insbesondere bevorzugt mindestens 10 : 1 beträgt.

Zur Durchführung des erfindungsgemäßen Verfahrens können die Ausgangsmaterialien a) und b) miteinander vermischt werden. Dem Reaktionsgemisch werden dann gegebenenfalls weitere Hilfs- und Zusatzmittel e), der Katalysator c), und Treibmittel (d) zugesetzt, das Ganze innig vermischt und das schaumfähige Gemisch in eine offene oder geschlossene Form eingegossen.

Bei Verwendung eines aus der Polyurethan-Verarbeitung bekannten Mehrkomponenten-Mischkopfes zeichnet sich das Verfahren durch eine hohe Flexibilität aus. Durch Variation des Mischungsverhältnisses der Komponenten a) und b) können mit ein und denselben Ausgangsmaterialien verschiedene Schaumstoff-Qualitäten hergestellt werden. Zusätzlich können auch verschiedene Komponenten a) und verschiedene Komponenten b) in unterschiedlichen Verhältnissen direkt in den Mischkopf gefahren werden. Die Hilfs- und Zusatzmittel e), der Katalysator c) und Treibmittel d) können separat oder als Batch in den Mischkopf gefahren werden. Möglich ist auch eine Dosierung der Hilfs- und Zusatzmittel e) zusammen mit dem Katalysator c) und eine separate Dosierung der Treibmittel d). Durch Variation der Menge an Treibmittel können Schäume mit verschiedenen Rohdichte-Bereichen hergestellt werden.

Es ist bevorzugt, dass die Vermischung der Komponenten einstufig erfolgt (sogenanntes "one-shot" Verfahren). Besonders bevorzugt soll die Umsetzung ohne den Schritt der Vortrimerisierung durchgeführt werden. Das Herstellverfahren kann kontinuierlich oder diskontinuierlich erfolgen.

Je nach eingesetzten Komponenten beginnt der Treibvorgang im Allgemeinen nach einer Liegezeit von 2 s bis 4 min und ist in der Regel nach 2 min bis 8 min beendet. Die Schäume sind feinzellig und gleichmäßig.

Eine nachträgliche Temperaturbehandlung der erfindungsgemäßen Schaumstoffe ist nicht erforderlich. In der bevorzugten Ausführungsform werden die Schaumstoffe nicht getempert.

In einer weiteren Ausführungsform wird nach dem Aufschäumen in den endgültigen geschäumten Zustand eine nachträgliche Temperaturbehandlung zwischen 70 und 250° C, bevorzugt 120 und 250° C, besonders bevorzugt 180 und 220° C vorgenommen.

Bei Verwendung einer geschlossenen Form zur Herstellung der erfindungsgemäßen Schaumstoffe (Formverschäumung) kann es zwecks Erreichens optimaler Eigenschaften vorteilhaft sein, die Form zu überfüllen. Überfüllen bedeutet, eine Menge an schaumfähigem Gemisch einzufüllen, die in einer offenen Form nach dem kompletten Aufschäumen ein größeres Volumen einnehmen würde als das innere Volumen der Form ausmacht.

Die erfindungsgemäßen Schaumstoffe besitzen eine geringe Wärmeleitfähigkeit, sehr gute mechanische Eigenschaften, wie eine hohe Druckfestigkeit, und einen hohen Druck-E-Modul. Weiter sind die erfindungsgemäßen Schaumstoffe schwer entflammbar und entwickeln beim Verbrennen nur wenig Hitze und Rauch. Sie besitzen niedrige dielektrische Verluste, die Feuchtebeständigkeit und Abriebfestigkeit sowie die Verarbeitbarkeit in Formen sind hervorragend. Daher eignen sich die erfindungsgemäßen Schaumstoffe hervorragend als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und -außenbauteilen, zur Herstellung von Dämmmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

Die Erfindung soll anhand der nachfolgenden Beispiele näher erläutert werden:

### Beispiele

In den nachfolgenden Beispielen beziehen sich alle Prozente auf Gewichtsprozente.

Sofern nicht explizit erwähnt, beziehen sich alle Angaben und Messwerte auf Schäume, die ohne nachträgliche Lagerung bei erhöhter Temperatur (Tempern) hergestellt wurden.

Die Messung der Druckfestigkeiten erfolgte gemäß ISO 844 EN.

Die Messung der Rohdichten erfolgte gemäß DIN EN ISO 845.

Die Wärmeleitfähigkeit wurde gemäß DIN 52612-2 bei einer Temperatur von 10° C bestimmt.

Die Messung der maximalen mittleren Wärmefreisetzungsrate (MARHE) erfolgte gemäß ISO 5660-1. Die Messung der Gesamten Rauchentwicklung per beanspruchte Oberfläche (TSP) erfolgte gemäß ISO 5660-2. Alle Prüfungen wurden mit einer Strahlungswärmestromdichte von 50 kW m⁻² an Probenkörpern mit Abmessungen von 100 mm × 100 mm × 20 mm durchgeführt.

Entzündbarkeit und Flammenausbreitung wurden gemäß den Anforderungen an die Baustoffklasse B2 gemäß DIN4102-1 ermittelt.

Die Abbindezeit ist definiert als die Zeitspanne zwischen Rührbeginn und dem Zeitpunkt, bei dem beim Berühren der Schaumoberfläche mit einem Stab kein Klebeeffekt feststellbar ist.

Alle erfindungsgemäßen Beispiele wurden mit einer Gesamtmenge an Einsatzstoffen von 500 ± 10 g hergestellt. Die Schäume wurden in Pappbechern mit einem Volumen von 10 l aufgeschäumt.

Folgende Einsatzstoffe wurden verwendet:

### Isocyanate:

A0: Mischung aus 60 Gew.-% 2,4'-Diisocyanatodiphenylmethan und 40 Gew.-% 4,4'-Diisocyanatodiphenylmethan.
A1: Mischung aus ca. 40 Gew.-% monomerem MDI und ca. 60 Gew.-% oligomerem MDI, mittlerer Funktionalität von ca. 2,7, Isocyanatgehalt von 31,5 g/100 g gemäß ASTM D 5199-96 A und einer Viskosität bei 25° C von 210 mPa*s gemäß DIN 53 018.
A2: Mischung aus ca. 30 Gew.-% monomerem MDI und 70 Gew.-% oligomerem MDI, Funktionalität von ca. 2,8, Isocyanatgehalt von 31,5 g/100 g gemäß ASTM D 5199-96 A, Viskosität bei 25° C von 550 mPa*s gemäß DIN 53 018.
A3: Mischung aus ca. 25 Gew.-% monomerem MDI und 75 Gew.-% oligomerem MDI, mittlerer Funktionalität von ca. 2,9 , Isocyanatgehalt von 31 g/100 g gemäß ASTM D 5199-96 A, Viskosität bei 25° C von 2200 mPa*s gemäß DIN 53 018.
A4: Zur Herstellung von A4 wurde A2 vorgelegt und mit Hilfe eines Kurzwegverdampfers mit einer Fläche von 0,06 m² bei einem Druck von 0,05 mbar und einer Ölbadtemperatur von 175 ° C wurden die am niedrigsten siedende Bestandteile, die Isomere des Diisocyanatodiphenylmethan, verdampft. Unter diesen Bedingungen zeigte die Massenbilanz, dass 25 - 27 Gew-% der Zulaufmenge verdampft wurden.
   Das so erhaltene Sumpfprodukt A4 wurde mittels HPLC analysiert, wobei ein mittleres Molekulargewicht von 527 g/mol und eine Polydispersität von 1,7 ermittelt wurde. Weiter wurde ein Gehalt an monomerem MDI von 12 Gew.-% ermittelt. Die Viskosität des Erhaltenen Produkts wurde mit einem Platte-Platte-Rheometer mit Durchmessern der Platte von 25 mm ermittelt und betrug bei einer Temperatur von 25° C 8000 mPa*s. Das Destillationsprodukt wurde ohne weitere Reinigungsschritte eingesetzt.
A5: Mischung aus ca. 35 Gew.-% monomerem MDI und 65 Gew.-% polymerem MDI, Funktionalität von ca. f=3,19 , Isocyanatgehalt von 30,5 bis 32%, Viskosität bei 25° C von 610 bis 750 mPa*s gemäß DIN 53 019.

### Epoxide:

B0: Diglycidylether von Bisphenol A, Ruetapox 0162, Handelsprodukt von Bakelite AG; Duisburg/Deutschland, Epoxidindex: 5,8-6,1 eq/kg und einem Epoxy-äquivalent von 167-171 g/eq, Viskosität bei 25° C 4000 bis 5000 mPas B1: Diglycidylether von Bisphenol A, Handelsprodukt D.E.R.™ 332 von The Dow Chemical Company, USA, Epoxy-äquivalent von 171-175 g/eq gemäß ASTM D-1652, Viskosität bei 25° C 4000 bis 6000 mPa*s gemäß ASTM D-445
B2: Leuna Epilox® A 18-00, niedermolekulares Epoxidharz auf der Basis von Bisphenol A, Handelsprodukt von LEUNA-Harze GmbH, Leuna/Deutschland, Epoxy-äquivalent von 175-185 g/eq gemäß DIN 16 945, Viskosität bei 25° C 8000 bis 10000 mPa*s gemäß DIN 53 015.
B3: Leuna Epilox® F 16-01, niedermolekulares Epoxidharz auf der Basis von Bisphenol F, Handelsprodukt von LEUNA-Harze GmbH, Leuna/Deutschland, Epoxy-äquivalent von 157-167 g/eq gemäß DIN 16 945, Viskosität bei 25° C von 1200 bis 1600 mPa*s gemäß DIN 53 015.
B4: Leuna Epilox® F 17-00, niedermolekulares Epoxidharz auf der Basis von Bisphenol F, Handelsprodukt von LEUNA-Harze GmbH, Leuna/Deutschland, Epoxy-äquivalent von 165 - 173 g/eq gemäß DIN 16 945, Viskosität bei 25° C von 2500 bis 4500 mPa*s gemäß DIN 53 015.

### C Katalysatoren

C0 Addocat 3144: N-[3-(Dimethylamino)propyl]formamid, Handelsprodukt von Rheinchemie, Mannheim/ Deutschland
C1 Accelerator DY 9577: Bortrichlorid-Amin-Komplex, thermolatenter Katalysator, Handelsprodukt von Huntsman, Bad Säckingen, Deutschland
C2 N-Methyldibenzylamin, CAS Nr 102-05-06, erhältlich van Sigma-Aldrich/ Deutschland
C3 N,N-Dimethylbenzylamin, 98% CAS Nr. 103-83-3, erhältlich von Sigma-Aldrich/Deutschland
C4 Dabco-T: N,N,N'-Trimethylaminoethylethanolamin, Handelsprodukt von Air Products and Chemicals, Allentown PA, USA
C5 Jeffcat ZF-10: N,N,N-Trimethyl-N-hydroxyethyl-bis(aminoethylether), Handelsprodukt von Huntsman, Bad Säckingen, Deutschland
C6 Jeffcat ZR-50: N,N-Bis(3-dimethylaminopropyl)-N-isopropanolamin, Handelsprodukt von Huntsman, Bad Säckingen, Deutschland
C7 Lupragen N 101: 2-Dimethylaminoethanol, Handelsprodukt von BASF SE, Ludwigshafen, Deutschland
C8 Lupragen N 107: Dimethyl-2-(2-aminoethoxy)ethanol, Handelsprodukt von BASF SE, Ludwigshafen, Deutschland
C9 Dabco® TMR-30: 2,4,6-Tri-(dimethylaminomethyl)-phenol-Katalysator der Firma Air Products

### D Treibmittel

D0 Ameisensäure (98 - 100%), CAS Nr. 64-18-6, erhältlich von KMF Laborchemie, Lohmar/ Deutschland
D1 85 Gew.-% Ameisensäure CAS Nr. 64-18-6 in Wasser
D2 Wasser
D3 Solkane 365/227: flüssiger Hydrofluorkohlenstoff als Treibmittel für Schäume, Mischung aus Pentafluorbutan (87 Gew.-%) mit Heptafluorpropan (13 Gew.-%), erhältlich von Solvay Fluor GmbH, Hannover, Deutschland
D4 Enovate® 3000: flüssiger Hydrofluorkohlenstoff Pentafluorpropan als Treibmittel für Schäume, erhältlich von Honeywell International Inc., Buffalo, USA D5 Cyclopentan, CAS Nr. 287-92-3
D6 Formacel® 1100: flüssiger Hydrofluorkohlenstoff Hexafluorbuten als Treibmittel für Schäume, erhältlich von DuPont de Nemours (Deutschland) GmbH, Neu Isenburg, Deutschland
D7 Solkane R 141 b: 1,1,Dichor-1-fuorethan

### E Additive

E1 p-Toluolsulfonsäuremethylester: CAS Nr. 80-48-8, erhältlich von Merck KGaA Darmstadt/ Deutschland
E2 Desmophen 3600Z: Polyetherpolyol, OH-Zahl 56 mg KOH/g, f = 2, hergestellt durch Propoxylierung von 1,2-Propylenglykol: Handelsprodukt der Bayer MaterialScience, Leverkusen, Deutschland
E3 Tegostab B 8411: Polyetherpolysiloxan, Handelsprodukt von Evonik, Essen, Deutschland
E4 Tegostab B 8485: Polyetherpolysiloxan, Handelsprodukt von Evonik, Essen, Deutschland
E5 DETDA 80, Diethyltoluyenediamin, CAS Nr. 68479-98-1, erhältlich von Lonza, Basel, Schweiz
E6 Dabco® DC 193, Silikontensid der Firma Air Products

### Beispiel 1

### (Vergleich, EPIC- Reaktionsharz-Herstellung, Vortrimerisierung zum Intermediat)

800 g Isocyanat A0 wurden bei 50° C mit 200 g des Epoxids B0 und 0,1 ml C3 gemischt und anschließend auf 120° C aufgeheizt. Die leicht exotherme Reaktion zeigte den sofortigen Beginn der Isocyanuratbildung an. Nach 2 Std. Reaktionszeit ohne externe Heizung wurde der Ansatz gekühlt. Dadurch stellte sich eine Innentemperatur von ca. 90° C ein. Dem Ansatz wurde eine Probe entnommen. Die Probe besitzt einen NCO-Gehalt von 23% NCO. Durch Zugabe von 1,07 g E1 wurde die Reaktion abgebrochen. Anschließend rührte man den Ansatz weitere 30 min bei 120° C. Es entstand ein bei 20° C flüssiges, klares, gelbes lagerstabiles Harz mit einer Viskosität bei 25° C von 2080 mPa*s und einem NCO-Gehalt von 21,4% (Intermediat).

### Beispiel 2a (Vergleich)

400 g des Harzes aus Beispiel 1 wurden mittels eines Schnellrührers für 2 Minuten mit Luft beladen. Unter Rühren wurden 17,6 g E2, 7,0 g E3 und 3,5 g C0 zugegeben. Direkt im Anschluss daran wurden 6,0 g D0 zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen. Der Schaum wurde für 3 h bei 200° C getempert.

Die Rohdichte des so erhaltenen Schaums betrug 39 kg/m³, die Druckfestigkeit 0,246 N mm⁻². Der Schaum erfüllt die Anforderungen der Baustoffklasse B2 gemäß DIN 4102-1. Der Schaum wies einen MARHE Wert von 120 KW m⁻² und eine gesamte Rauchentwicklung (TSP) von 920 m² m⁻² auf.

### Beispiel 2b (Vergleich)

400 g des Harzes aus Beispiel 1 wurden mittels eines Schnellrührers für 2 Minuten mit Luft beladen. Unter Rühren wurden17,6 g E2, 7,0 g E3 und 3,5 g C0 zugegeben. Direkt im Anschluss daran wurden 6,0 g D0 zugegeben und die Reaktionsmischung für weitere 10 s innig vermischt. Die Reaktionsmischung wurde in einen 20x20x24 cm Pappkarton gegossen und man ließ die Reaktionsmischung in dem Pappkarton aufschäumen.

Die Rohdichte des so erhaltenen Schaums betrug 39 kg/m³, die Druckfestigkeit 0,296 N mm⁻². Der Schaum erfüllt die Anforderungen der Baustoffklasse B2 gemäß DIN 4102-1 nicht. Der Schaum wies einen MARHE Wert von 132 kW/m² und eine gesamte Rauchentwicklung (TSP) von 761 m² m⁻² auf.

### Beispiel 3

Isocyanat und Epoxidharz wurden mittels eines Schnellrührers für 20s bis 30s bei 1000 U/min vermengt. Das chemische Treibmittel wurde zugegeben und für 10s bei 1000 U/min vermengt. Physikalische Treibmittel wurden danach zugegeben und bei 200 U/min vermengt bis sich eine homogene Mischung ergab. Danach wurden Katalysatoren zugegeben und bei 2000 U/min für 3s vermengt.

Die genaue Zusammensetzung der Ausgangssubstanzen sowie die mechanischen Werte und die Ergebnisse der Brandprüfung der erhaltenen Schaumstoffe sind in Tabelle 1 angegeben.

**Tabelle 1:**

| Komponenten in Schaumformulierung und physikalische Kenngrößen. Alle Men genangaben in Gewichts-%. | | | | |
|---|---|---|---|---|
| Formulierung | 3.1 | 3.2 | 3.3 | 3.4 |
| Isocyanat | A1 | A2 | A3 | A4 |
| Isocyanat Menge | 68,2 | 68,16 | 68,51 | 68,16 |
| Epoxidharz | B1 | B1 | B1 | B1 |
| Epoxidharz Menge | 17,65 | 17,65 | 17,45 | 17,65 |
| Katalysator C1 | 1,02 | 1,02 | 1,01 | 1,02 |
| Katalysator C2 | 0,73 | 0,73 | 0,73 | 0,73 |
| Katalysator C3 | 0,49 | 0,49 | 0,48 | 0,49 |
| Katalysator C4 | 0,64 | 0,64 | 0,63 | 0,64 |
| Treibmittel D1 | 0,99 | 0,99 | 0,98 | 0,99 |
| Treibmittel D3 | 7,06 | 7,06 | 6,98 | 7,06 |
| Additiv E4 | 1,93 | 1,93 | 1,91 | 1,93 |
| Additiv E5 | 1,34 | 1,34 | 1,33 | 1,34 |
| Messwerte | | | | |
| Druckfestigkeit (N mm⁻²) | 0,157 | 0,192 | 0,187 | 0,138 |
| Rohdichte (kg m⁻³) | 32 | 34 | 35 | 37 |
| Wärmeleitfähigkeit (mW m⁻¹ K^{- 1}) | 21,5 | 20,4 | 20,7 | 20,2 |
| | | | | |
| Erfüllt DIN 4102-1 B2 | Ja | Ja | Ja | Ja |
| MARHE (kW m⁻²) | 77 | 72 | 72 | 68 |
| TSP (m² m⁻²) | 477 | 386 | 818 | 443 |

### Beispiel 4

Gemäß dem in Beispiel 3 beschriebenen Schäumverfahren wurden Schäume auf Basis der Epoxidkomponente B4 hergestellt. Die genaue Zusammensetzung der Ausgangssubstanzen sowie die mechanischen Werte und die Ergebnisse der Brandprüfung sind in Tabelle 2 angegeben.

**Tabelle 2:**

| Komponenten in Schaumformulierung und physikalische Kenngrößen. Alle Mengenangaben der Formulierung in Gewichts-%. | | | | |
|---|---|---|---|---|
| Formulierung | 4.1 | 4.2 | 4.3 | 4.4 |
| Isocyanat | A1 | A3 | A2 | A5 |
| Isocyanat Menge | 68,15 | 68,15 | 68,15 | 68,15 |
| Epoxidharz | B4 | B4 | B4 | B4 |
| Epoxidharz Menge | 17,65 | 17,65 | 17,65 | 17,65 |
| Katalysator C1 | 1,02 | 1,02 | 1,02 | 1,02 |
| Katalysator C2 | 0,73 | 0,73 | 0,73 | 0,73 |
| Katalysator C3 | 0,49 | 0,49 | 0,49 | 0,49 |
| Katalysator C4 | 0,64 | 0,64 | 0,64 | 0,64 |
| Treibmittel D1 | 0,99 | 0,99 | 0,99 | 0,99 |
| Treibmittel D3 | 7,06 | 7,06 | 7,06 | 7,06 |
| Additiv E4 | 1,93 | 1,93 | 1,93 | 1,93 |
| Additiv E5 | 1,34 | 1,34 | 1,34 | 1,34 |
| Messwerte | | | | |
| Druckfestigkeit (N mm⁻²) | 0,12 | 0,12 | 0,12 | 0,16 |
| Rohdichte (kg m⁻³) | 26 | 29 | 29 | 34 |
| Wärmeleitfähigkeit (mW m⁻¹ K^{- 1}) | 21,9 | 22,3 | 21,6 | 21,7 |
| Erfüllt DIN 4102-1 B2 | Ja | Ja | Ja | Ja |
| MARHE (kW m⁻²) | 69 | 68 | 81 | 66 |
| TSP (m² m⁻²) | 250 | 250 | 375 | 386 |

### Beispiel 5

Gemäß dem in Beispiel 3 beschriebenen Schäumverfahren wurden Schaumstoffe hergestellt, wobei das Treibmittel variiert wurde. In den Beispielen V5.7 und V5.8 wurde kein einbaubarer Katalysator eingesetzt. In Beispiel V5.9 wird ein Katalysator mit wenig reaktiver, aromatischer OH-Gruppe eingesetzt. Die genaue Zusammensetzung der Ausgangssubstanzen sowie die mechanischen Werte und die Ergebnisse der Brandprüfung sind in Tabelle 3 angegeben.

**Tabelle 3:**

| Komponenten in Schaumformulierung und physikalische Kenngrößen. Alle Mengenangaben der Formulierung in Gewichts-%. | | | | | | | | | |
|---|---|---|---|---|---|---|---|---|---|
| Formulierung | V5.1 | V5.2 | V5.3 | 5.4 | V5.5 | V5.6 | V5.7 | V5.8 | V5.9 |
| Isocyanat | A2 | A2 | A2 | A2 | A2 | A2 | A2 | A2 | A2 |
| Isocyanat Menge | 68,15 | 68,15 | 68,15 | 68,15 | 68,15 | 68,15 | 68,15 | 68,15 | 68,15 |
| Epoxidharz | B2 | B2 | B2 | B2 | B2 | B2 | B2 | B2 | B2 |
| Epoxidharz Menge | 22,62 | 17,61 | 19,47 | 22,49 | 20,00 | 19,47 | 23,2 | 20,4 | 17,0 |
| Katalysator C1 | 1,30 | 1,01 | 1,12 | 1,30 | 1,15 | 1,12 | 1,34 | 1,18 | |
| Katalysator C2 | 0,94 | 0,73 | 0,81 | 0,94 | 0,83 | 0,81 | 0,96 | 0,85 | |
| Katalysator C3 | 0,62 | 0,49 | 0,54 | 0,62 | 0,55 | 0,54 | 0,64 | 0,56 | |
| Katalysator C4 | 0,81 | 0,63 | 0,70 | 0,81 | 0,72 | 0,70 | 0 | 0 | |
| Katalysator C9 | | | | | | | | | 4,4 |
| Treibmittel D1 | 0 | 0 | 0 | 1,53 | 0 | 0 | 0 | 0 | 0,6 |
| Treibmittel D2 | 1,36 | 1,06 | 0,93 | 0 | 0,88 | 0,93 | 1,4 | 0,9 | |
| Treibmittel D4 | 0 | 7,05 | 4,67 | 0 | 0 | 0 | 0 | 0 | |
| Treibmittel D5 | 0 | 0 | 0 | 0 | 4,00 | 0 | 0 | 4,2 | |
| Treibmittel D6 | 0 | 0 | 0 | 0 | 0 | 4,67 | 0 | 0 | |
| Treibmittel D7 | | | | | | | | | 8,0 |
| Additiv E4 | 2,47 | 1,92 | 2,13 | 2,46 | 2,18 | 2,13 | 2,53 | 2,23 | |
| Additiv E5 | 1,72 | 1,34 | 1,48 | 1,71 | 1,52 | 1,48 | 1,76 | 1,55 | |
| Additiv E6 | | | | | | | | | 1,9 |
| Messwerte | | | | | | | | | |
| Druckfestigkeit (N mm⁻²) | 0,131 | 0,129 | 0,198 | 0,198 | 0,137 | 0,184 | 0,141 | 0,139 | |
| Rohdichte (kg m⁻³) | 28,1 | 24,4 | 32,6 | 36,4 | 25,2 | 35 | 27,9 | 26,6 | 42,4 |
| Wärmeleitfähigkeit (mW m⁻¹ K⁻¹) | 23,3 | 21,8 | 27,2 | 24,2 | 20,6 | 20,6 | 23,1 | 21,4 | |
| | | | | | | | | | |
| Erfüllt DIN 4102-1 B2 | Ja | Ja | Ja | Ja | Ja | Ja | Ja | Ja | Ja |
| MARHE (kW m⁻²) | 75 | 67 | 64 | 74 | 73 | 72 | 93 | 89 | 125 |
| TSP (m² m⁻²) | 591 | 318 | 409 | 568 | 330 | 420 | 591 | 352 | |

Die Beispiele in Tabelle 3 zeigen, dass durch den Einsatz erfindungsgemäßer, einbaubarer Katalysatoren bei ansonsten ähnlichen mechanischen Eigenschaften die Brandeigenschaften deutlich verbessert werden können. Insbesondere die MARHE-Werte sind für die erfindungsgemäßen Schaumstoffe deutlich reduziert.

### Beispiel 6

Gemäß dem in Beispiel 3 beschriebenen Schäumverfahren wurden Schaumstoffe hergestellt, wobei in den Beispielen 6.1 bis 6.5 ausschließlich reaktive Katalysatoren verwendet wurden.

Im Vergleich dazu wird bei Verwendung eines Katalysatorpakets mit nicht reaktiven Komponenten (6.6) die Abbindezeit des Schaumes extrem lang. Damit verbleibt der Schaum über sehr lange Zeit klebrig und zeichnet sich durch eine zu geringe Festigkeit nach dem Schäumen auf, was für die Verarbeitung sehr nachteilig ist.

**Tabelle 4:**

| Komponenten in Schaumformulierung und physikalische Kenngrößen. Alle Mengenangaben der Formulierung in Gewichts-%. | | | | | | |
|---|---|---|---|---|---|---|
| Formulierung | 6.1 | 6.2 | 6.3 | 6.4 | 6.5 | V6.6 |
| Isocyanat | A2 | A2 | A2 | A2 | A2 | A2 |
| Isocyanat Menge | 68,15 | 68,15 | 68,15 | 68,15 | 68,15 | 68,15 |
| Epoxidharz | B2 | B2 | B2 | B2 | B2 | B2 |
| Epoxidharz Menge | 19,89 | 19,89 | 19,89 | 19,89 | 19,89 | 20,0 |
| Katalysator C4 | 0,72 | 0 | 0 | 0 | 0 | 0 |
| Katalysator C5 | 0 | 0,72 | 0 | 0 | 0 | 0 |
| Katalysator C6 | 0 | 0 | 0,72 | 0 | 0 | 0 |
| Katalysator C7 | 0 | 0 | 0 | 0,72 | 0 | 0 |
| Katalysator C8 | 0 | 0 | 0 | 0 | 0,72 | 0 |
| Katalysator C1 | 0 | 0 | 0 | 0 | 0 | 0,27 |
| Katalysator C2 | 0 | 0 | 0 | 0 | 0 | 0,14 |
| Katalysator C3 | 0 | 0 | 0 | 0 | 0 | 0,10 |
| Treibmittel D1 | 1,11 | 1,11 | 1,11 | 1,11 | 1,11 | 0,96 |
| Treibmittel D3 | 7,96 | 7,96 | 7,96 | 7,96 | 7,96 | 8,0 |
| Additiv E4 | 2,17 | 2,17 | 2,17 | 2,17 | 2,17 | 2,18 |
| Additiv E5 | 0 | 0 | 0 | 0 | 0 | 0,21 |
| Messwerte | | | | | | |
| Abbindezeit (s) | 94 | 285 | 230 | 260 | 118 | >600 s |
| Druckfestigkeit (N mm⁻ 2) | 0,152 | 0,143 | 0,139 | 0,164 | 0,146 | 0,17 |
| Rohdichte (kg m⁻³) | 28,8 | 29,6 | 29,2 | 30 | 28,9 | 34 |
| Wärmeleitfähigkeit (mW m⁻¹ K⁻¹) | 21,4 | 23,4 | 22,4 | 22,9 | 21,8 | 23,4 |
| | | | | | | |
| Erfüllt DIN 4102-1 B2 | Ja | Ja | Ja | Ja | Ja | Ja |
| MARHE (kW m⁻²) | 90 | 92 | 88 | 85 | 89 | 85 |
| TSP (m² m⁻²) | 375 | 420 | 443 | 375 | 750 | 409 |

## Patentansprüche

1. Verfahren zur Herstellung eines Schaumstoffs bei dem man
a) Polyisocyanat mit
b) mindestens einer, mindestens zwei Epoxidgruppen aufweisenden organischen Verbindung,
c) mindestens einem, die Isocyanat/Epoxid-Reaktion beschleunigenden Katalysator
d) chemischen und/oder physikalischen Treibmitteln, enthaltend Ameisensäure, und
e) gegebenenfalls Hilfs- und Zusatzstoffen, insbesondere e1) mehrfunktionelle Hydroxyl- oder Aminogruppenhaltige Verbindungen, zu einer Reaktionsmischung vermischt, wobei das Äquivalentverhältnis von Isocyanatgruppen zu Epoxidgruppen von 1,2 : 1 bis 500 : 1 ist, wobei die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der gegebenenfalls eingesetzten Komponente e1) und den gegebenenfalls in der Komponente b) vorliegenden Hydroxylgruppen mindestens 1,2 : 1 beträgt, wobei im Falle des Einsatzes der Komponente e1) das NCO/OH-Äquivalentverhältnis, bezogen auf die Isocyanatgruppen der Komponente a) und die Hydroxylgruppen und/oder Aminogruppen der Komponente e1) mindestens 2:1 beträgt, und man die Reaktionsmischung zum Schaumstoff umsetzt,
**dadurch gekennzeichnet, dass** der die Isocyanat/Epoxid-Reaktion beschleunigenden Katalysator (c) mindestens einen Katalysator aufweist, der ausgewählt ist aus der Gruppe, bestehend aus N,N,N-Trimethylaminoethylethanolamin, Bisdimethylaminopropylharnstoff, Dimethylaminopropylharnstoff, N,N,N-Trimethyl-N-hydroxyethylbis(aminopropylether), N,N,N-Trimethyl-N-hydroxyethylbis(aminoethylether), 2-Dimethylaminoethanol, Diethylethanolamin, Bis(N,N-dimethyl-3-aminopropyl)amin, Dimethylaminopropylamin, 3-Dimethylaminopropyl-N,N-dimethylpropan-1,3-diamin, Dimethyl-2-(2-amino-ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3-aminopropyl)-bis(aminoethylether oder Mischungen davon, und dass die Isocyanate a) 2,2'-MDI oder 2,4'-MDI oder 4,4'-MDI oder oligomeres MDI, oder Mischungen aus zwei oder drei der Diphenylmethandiisocyanate 2,2'-MDI, 2,4'-MDI und 4,4'-MDI, oder Roh-MDI, oder Mischungen aus mindestens einem Oligomer des MDI und mindestens einem der niedermolekularen MDI-Derivate 2,2'-MDI, 2,4'-MDI oder 4,4'-MDI aufweisen.

2. Verfahren zur Herstellung eines Schaumstoffs nach Anspruch 1, **dadurch gekennzeichnet, dass** die Isocyanate a) Mischungen aus mindestens einem Oligomer des MDI und mindestens einem der niedermolekularen MDI-Derivate 2,2'-MDI, 2,4'-MDI oder 4,4'-MDI aufweisen.

3. Verfahren zur Herstellung eines Schaumstoffs nach Anspruch 2, **dadurch gekennzeichnet, dass** der Gehalt an oligomerem MDI größer 60 Gew.-%, bezogen auf das Gesamtgewicht der Komponente (a), ist.

4. Verfahren zur Herstellung eines Schaumstoffs nach einem der Ansprüche 1 bis 3, **dadurch gekennzeichnet, dass** die mindestens zwei Epoxidgruppen aufweisenden organischen Verbindung ausgewählt sind aus der Gruppe, bestehend aus Polyglycidylether von Bisphenol A, Bisphenol F oder Novolaken oder Mischungen davon.

5. Verfahren zur Herstellung eines Schaumstoffs nach einem der Ansprüche 1 bis 4, **dadurch gekennzeichnet, dass** der die Isocyanat/Epoxid-Reaktion beschleunigenden Katalysator (c) neben dem Katalysator, der mindestens ein gegenüber Isocyanat reaktives Wasserstoffatom aufweist, mindestens einen weiteren Aminkatalysator aufweist.

6. Verfahren zur Herstellung eines Schaumstoffs nach Anspruch 5, **dadurch gekennzeichnet, dass** der weitere Aminkatalysator ausgewählt ist aus der Gruppe, bestehend aus Bortrichlorid-tert.-Amin-Addukten, N,N-Dimethylbenzylamin und Mischungen daraus.

7. Verfahren zur Herstellung eines Schaumstoffs nach einem der Ansprüche 1 bis 6, **dadurch gekennzeichnet, dass** der Katalysator (c) in einer Menge von 2,1 bis 5 Gew.-%, bezogen auf das Gesamtgewicht der Komponente (a), (b) und (c) eingesetzt wird.

8. Verfahren zur Herstellung eines Schaumstoffs nach einem der Ansprüche 1 bis 7, **dadurch gekennzeichnet, dass** die Treibmittel (d) keine halogenierten Kohlenwasserstoffe enthalten.

9. Verfahren zur Herstellung eines Schaumstoffs nach einem der Ansprüche 1 bis 8, **dadurch gekennzeichnet, dass** das Zusatzmittel e) Verbindungen el-ii) mit mindestens zwei gegenüber Isocyanaten reaktiven Wasserstoffatomen und einem Molekulargewicht von kleiner 500 g/mol aufweist, wobei mindestens eines der gegenüber Isocyanaten reaktiven Wasserstoffatomen zu einer primären oder sekundären Aminogruppe gehört.

10. Schaumstoff, erhältlich nach einem Verfahren gemäß einem der Ansprüche 1 bis 9.

11. Verwendung eines Schaumstoffs gemäß Anspruch 10 als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und -außenbauteilen, zur Herstellung von Dämmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

12. Verwendung der schaumfähigen Mischungen gemäß einem der Ansprüche 1 bis 9 vor dem Ende der Verschäumung zum erfindungsgemäßen hochtemperaturbeständigen Schaumstoff zum Verkleben von Substraten, insbesondere zum Verkleben von Stahl- und Kupferblechen und Kunststoffplatten, insbesondere Polybutylenterephthalat-Platten.

## Claims

1. A process for producing a foam in which
a) a polyisocyanate is mixed with
b) at least one organic compound having at least two epoxy groups,
c) at least one catalyst accelerating the isocyanate/epoxide reaction,
d) chemical and/or physical blowing agents containing formic acid, and
e) optionally auxiliary agents and additives, especially e1) multifunctional compounds containing hydroxy or amino groups,
to form a reaction mixture, wherein the equivalent ratio of isocyanate groups to epoxy groups is from 1.2:1 to 500:1, wherein the amount of component a) is such that the equivalent ratio of isocyanate groups of component a) to the sum of the epoxy groups of component b), hydroxy groups and/or amino groups of optionally employed component e1) and the hydroxy groups that may be present in component b) is at least 1.2:1, wherein in the case where component e1) is employed, the NCO/OH equivalent ratio, based on the isocyanate groups of component a) and the hydroxy groups and/or amino groups of component e1), is at least 2:1, and the reaction mixture is reacted into a foam,
**characterized in that** said catalyst (c) accelerating the isocyanate/ epoxide reaction includes at least one catalyst selected from the group consisting of N,N,N-trimethylaminoethylethanolamine, bisdimethylaminopropylurea, dimethylaminopropylurea, N,N,N-trimethyl-N-hydroxyethylbis(aminopropyl ether), N,N,N-trimethyl-N-hydroxyethylbis(aminoethyl ether), 2-dimethylaminoethanol, diethylethanolamine, bis(N,N-dimethyl-3-aminopropyl)-amine, dimethylaminopropylamine, 3-dimethylaminopropyl-N,N-dimethylpropane-1,3-diamine, dimethyl-2-(2-aminoethoxyethanol) and (1,3-bis-(dimethylamino)-propane-2-ol), N,N-bis(3-dimethylaminopropyl)-N-isopropanolamine, bis(dimethylaminopropyl)-2-hydroxyethylamine, N,N,N-trimethyl-N-(3-aminopropyl)bis(aminoethyl ether), or mixtures thereof,
and that said isocyanates a) include 2,2'-MDI or 2,4'-MDI or 4,4'-MDI, or oligomeric MDI, or mixtures of two or three of said diphenylmethane diisocyanates 2,2'-MDI, 2,4'-MDI and 4,4'-MDI, or raw MDI, or mixtures of at least one oligomer of MDI and at least one of said low molecular weight MDI derivatives 2,2'-MDI, 2,4'-MDI or 4,4'-MDI.

2. The process for producing a foam according to claim 1, **characterized in that** said isocyanates a) include mixtures of at least one oligomer of MDI and at least one of said low molecular weight MDI derivatives 2,2'-MDI, 2,4'-MDI or 4,4'-MDI.

3. The process for producing a foam according to claim 2, **characterized in that** the content of said oligomeric MDI is greater than 60% by weight, based on the total weight of component (a).

4. The process for producing a foam according to any of claims 1 to 3, **characterized in that** said organic compounds having at least two epoxy groups are selected from the group consisting of a polyglycidyl ether of bisphenol A, bisphenol F, or novolacs, or mixtures thereof.

5. The process for producing a foam according to any of claims 1 to 4, **characterized in that** said catalyst accelerating the isocyanate/epoxide reaction (c) includes at least one further amine catalyst in addition to the catalyst having at least one isocyanate-reactive hydrogen atom.

6. The process for producing a foam according to claim 5, **characterized in that** said further amine catalyst is selected from the group consisting of boron trichloride tert. amine adducts, N,N-dimethylbenzylamine, N,N-methyldibenzylamine, and mixtures thereof.

7. The process for producing a foam according to any of claims 1 to 6, **characterized in that** said catalyst (c) is employed in an amount of from 2.1 to 5% by weight, based on the total weight of components (a), (b) and (c).

8. The process for producing a foam according to any of claims 1 to 7, **characterized in that** said blowing agents (d) do not contain any halogenated hydrocarbons.

9. The process for producing a foam according to any of claims 1 to 8, **characterized in that** said additive e) includes compounds e1-ii) with at least two isocyanate-reactive hydrogen atoms and a molecular weight of less than 500 g/mol, wherein at least one of said isocyanate-reactive hydrogen atoms belongs to a primary or secondary amino group.

10. A foam obtainable by a process according to any of claims 1 to 9.

11. Use of a foam according to claim 10 as a filling foam for hollow spaces, as a filling foam for electric insulation, as a core of sandwich constructions, for the preparation of construction materials for all kinds of interior and exterior applications, for the preparation of construction materials for vehicle, ship, airplane and rocket construction, for the preparation of airplane interior and exterior construction parts, for the preparation of all kinds of insulation materials, for the preparation of insulation plates, tube and container insulations, for the preparation of sound-absorbing materials, for use in engine compartments, for the preparation of grinding wheels, and for the preparation of high-temperature insulations and hardly flammable insulations.

12. Use of the foamable mixtures according to any of claims 1 to 9 before the end of the foaming to form the foam having high temperature resistance according to the invention for adhesively bonding substrates, especially for adhesively bonding steel and copper plates, and plastic sheets, especially polybutylene terephthalate sheets.

## Revendications

1. Procédé pour préparer une mousse plastique, où l'on
a) mélange un polyisocyanate avec
b) au moins un composé organique ayant au moins deux groupes époxydes,
c) au moins un catalyseur accélérant la réaction isocyanate/époxyde,
d) des agents d'expansion chimiques et/ou physiques contenant de l'acide formique, et
e) éventuellement des auxiliaires et additifs, notamment e1) des composés multifonctionnels contenant des groupes hydroxy ou amino,
pour former un mélange de réaction, dans lequel le rapport d'équivalent de groupes isocyanates à groupes époxydes est de 1,2 : 1 à 500 : 1, dans lequel la quantité du composant a) est telle que le rapport d'équivalent de groupes isocyanates du composant a) à la somme des groupes époxydes du composant b), des groupes hydroxy et/ou amino du composant e1) éventuellement utilisé et les groupes hydroxy éventuellement présents dans le composant b) est au moins 1,2 : 1, dans lequel dans le cas où le composant e1) est utilisé, le rapport d'équivalent de NCO/OH, par rapport aux groupes isocyanates du composant a) et aux groupes hydroxy et/ou amino du composant e1), est au moins 2 : 1, et le mélange de réaction est transformé en mousse plastique,
**caractérisé en ce que** ledit catalyseur (c) accélérant la réaction isocyanate/ époxyde contient au moins un catalyseur choisi dans le groupe consistant en N,N,N-triméthylaminoéthyléthanolamine, bisdiméthylaminopropylurée, diméthylaminopropylurée, N,N,N-triméthyl-N-hydroxyéthylbis(aminopropyl éther), N,N,N-triméthyl-N-hydroxyéthylbis(aminoéthyl éther), 2-diméthyl-aminoéthanol, diéthyléthanolamine, bis(N,N-diméthyl-3-aminopropyl)-amine, diméthylaminopropylamine, 3-diméthylaminopropyl-N,N-diméthyl-propane-1,3-diamine, diméthyl-2-(2-aminoéthoxyéthanol) et (1,3-bis-(diméthylamino)-propane-2-ol), N,N-bis(3-diméthylaminopropyl)-N-iso-propanolamine, bis(diméthylaminopropyl)-2-hydroxyéthylamine, N,N,N-triméthyl-N-(3-aminopropyl)bis(aminoéthyl éther), ou des mélanges de ceux-ci,
et **en ce que** lesdits isocyanates a) comprennent du 2,2'-MDI ou 2,4'-MDI ou 4,4'-MDI, ou MDI oligomérique, ou des mélanges de deux ou trois desdits diphénylméthane diisocyanates 2,2'-MDI, 2,4'-MDI et 4,4'-MDI, ou du MDI brut, ou des mélanges d'au moins un oligomère de MDI et d'au moins un des dérivés de MDI à bas poids moléculaire 2,2'-MDI, 2,4'-MDI ou 4,4'-MDI.

2. Procédé pour préparer une mousse plastique selon la revendication 1, **caractérisé en ce que** lesdits isocyanates a) comprennent des mélanges d'au moins un oligomère de MDI et d'au moins un des dérivés de MDI à bas poids moléculaire 2,2'-MDI, 2,4'-MDI ou 4,4'-MDI.

3. Procédé pour préparer une mousse plastique selon la revendication 2, **caractérisé en ce que** la teneur de MDI oligomérique est supérieure à 60 % en poids, par rapport au poids total du composant (a).

4. Procédé pour préparer une mousse plastique selon l'une quelconque des revendications 1 à 3, **caractérisé en ce que** ledit composé organique ayant au moins deux groupes époxydes est choisi dans le groupe consistant en polyglycidyléthers de bisphénol A, bisphénol F ou novolaques, ou des mélanges de ceux-ci.

5. Procédé pour préparer une mousse plastique selon l'une quelconque des revendications 1 à 4, **caractérisé en ce que** ledit catalyseur (c) accélérant la réaction isocyanate/époxyde comprend au moins un catalyseur amine additionnel outre que le catalyseur contenant au moins un atome d'hydrogène réactif vis-à-vis l'isocyanate.

6. Procédé pour préparer une mousse plastique selon la revendication 5, **caractérisé en ce que** ledit catalyseur amine additionnel est choisi dand le groupe consistant en adduits de trichlorure de bore/amine tertiaire, N,N-diméthylbenzylamine, et des mélanges de ceux-ci.

7. Procédé pour préparer une mousse plastique selon l'une quelconque des revendications 1 à 6, **caractérisé en ce que** ledit catalyseur (c) est utilisé en une quantité de 2,1 à 5 % en poids, par rapport au poids total des composants (a), (b) et (c).

8. Procédé pour préparer une mousse plastique selon l'une quelconque des revendications 1 à 7, **caractérisé en ce que** lesdits agents d'expansion (d) ne contiennent pas d'hydrocarbures halogénés.

9. Procédé pour préparer une mousse plastique selon l'une quelconque des revendications 1 à 8, **caractérisé en ce que** ledit additif e) comprend des composés el-ii) avec au moins deux atomes d'hydrogène réactifs vis-à-vis les isocyanates et un poids moléculaire de moins de 500 g/mol, dans lequel au moins un desdits atomes d'hydrogène réactifs vis-à-vis les isocyanates appartient à un groupe amino primaire ou secondaire.

10. Mousse plastique pouvant être obtenue par un procédé selon l'une quelconque des revendications 1 à 9.

11. Utilisation d'une mousse plastique selon la revendication 10 comme mousse de remplissage pour cavités, mousse de remplissage pour isolation électrique, comme âme de constructions sandwich, pour la production de matériaux de construction pour applications internes et externes de tout type, pour la production de matériaux de construction pour la construction de véhicules, navale, aéronautique et de fusées, pour la production d'éléments internes et externes d'avions, pour la production de matériaux isolants de tout type, pour la production de plaques isolantes, d'isolations de tubes et de récipients, pour la production de matériaux d'absorption du son, pour l'utilisation dans les compartiments moteur, pour la production de disques abrasifs, et pour la production d'isolations haute température et d'isolations difficilement inflammables.

12. Utilisation des mélanges expansibles selon l'une quelconque des revendications 1 à 9 avant la fin de l'expansion en mousse plastique résistante à haute température selon l'invention pour coller des substrats, notamment pour coller des tôles d'acier et de cuivre et des plaques de plastique, notamment des plaques de poly(téréphthalate de butylène).
